# FASCICULE DE BREVET EUROPEEN

(11) **EP 2 441 516 B1**
(45) Date de publication et mention de la délivrance du brevet: **22.01.2014**
(21) Numéro de dépôt: 11290463.6
(22) Date de dépôt: 04.10.2011
(51) Int. Cl.: B01J 23/656, B01J 23/46, B01J 27/13, B01J 27/045, B01J 27/185, B01J 21/04, C10G 35/09

(54) **Catalyseur optimisé pour le reformage catalytique**
Optimierter Katalysator für katalytisches Reformierungsverfahren
Optimised catalyst for catalytic reforming

(30) Priorité: 15.10.2010 FR 1004051
(43) Date de publication de la demande: 18.04.2012
(73) Titulaire: IFP Energies Nouvelles, 92852 Rueil Malmaison Cedex (FR)
(72) Inventeur: Lacombe, Sylvie, 69390 Vernaison (FR); Boualleg, Malika, 69100 Villeurbanne (FR); Sanchez, Eric, 69230 Saint Genis Laval (FR)

(56) Documents cités:
- WO-A1-84/02663
- US-A- 4 425 222
- US-A1- 2003 220 192

## Description

La présente invention concerne un catalyseur de reformage optimisé, son utilisation dans un procédé de reformage d'une charge hydrocarbonée. L'invention concerne aussi l'utilisation d'un support d'alumine à faible teneur en soufre et en phosphore pour la fabrication d'un catalyseur de reformage. L'invention s'applique au domaine technique du raffinage et plus particulièrement au reformage.

Le procédé de reformage catalytique est un procédé très largement utilisé par les raffineurs pour valoriser l'essence lourde obtenue par distillation. Les hydrocarbures de la charge d'essence lourde (des paraffines et des naphtènes) contenant de 6 à 12 atomes de carbone environ par molécule sont transformés au cours de ce procédé en hydrocarbures aromatiques ou à défaut en paraffines branchées. Cette transformation est obtenue à haute température (de l'ordre de 500°C), à pression basse à moyenne (3,5 à 25.10⁵ Pa) et en présence d'un catalyseur. Le reformage catalytique produit du reformat qui permet d'améliorer l'indice d'octane des coupes pétrolières. Le reformat est majoritairement formé de composés en C5+ (contenant au moins 5 atomes de carbone). Ce procédé produit également un gaz riche en hydrogène, un gaz combustible (formé par des composés en C1-C2) et des gaz liquéfiés (formés par des composés en C3-C4). Enfin, il se produit aussi une formation de coke notamment par condensation de noyaux aromatiques formant un produit solide, riche en carbone, qui se dépose sur les sites actifs du catalyseur. Les réactions qui produisent des composés en C1-C4 (appelés aussi C4-) et le coke sont préjudiciables au rendement en reformat et à la stabilité du catalyseur. Il est important de rechercher à augmenter l'activité des catalyseurs pour obtenir des rendements en C5+ élevés à la plus faible température possible, de manière à maximiser la durée de cycle du catalyseur. La forte activité du catalyseur doit se conjuguer avec la plus grande sélectivité possible, c'est-à-dire que les réactions de craquage conduisant à des produits légers contenant de 1 à 4 atomes de carbone (C4 -) doivent être limitées.

Les catalyseurs de reformage sont des solides poreux sous la forme de bâtonnets, de billes ou de grains et comprennent généralement de l'alumine pure comme support, du chlore, du platine et au moins un métal additionnel choisi dans le groupe formé par les métaux des groupes 7, 8, 9, 10, 13 et 14. Ce sont des catalyseurs bifonctionnels, c'est-à-dire qu'ils sont constitués de deux fonctions, une métallique et une acide, chacune des fonctions ayant un rôle bien défini dans l'activité du catalyseur. La fonction métallique assure essentiellement la déshydrogénation des naphtènes et des paraffines et l'hydrogénation des précurseurs de coke. La fonction acide assure l'isomérisation des naphtènes et des paraffines et la cyclisation des paraffines. La fonction acide est apportée par le support lui-même, le plus souvent une alumine pure halogénée. La fonction métallique est assurée par un métal noble de la famille du platine et au moins un métal additionnel, principalement l'étain pour le procédé continu (lit mobile), et le rhénium dans le procédé semi-régénératif (lit fixe).

Ces catalyseurs de reformage sont extrêmement sensibles, outre le coke, à divers poisons ou inhibiteurs susceptibles de dégrader leur activité : en particulier l'azote, les métaux et l'eau. Le coke, en se déposant sur la surface du catalyseur entraîne une perte d'activité au cours du temps qui conduit à des températures de fonctionnement plus élevées, un rendement en reformat plus faible, et une durée de cycle plus faible. Il est nécessaire au bout d'une certaine période de régénérer le catalyseur pour éliminer le coke et les poisons qui se sont déposés sur ses sites actifs. La régénération des catalyseurs de reformage comprend essentiellement une étape de combustion contrôlée pour éliminer le coke et une étape d'oxychloration qui permet éventuellement d'éliminer les poisons déposés sur le catalyseur mais essentiellement de redisperser les métaux et d'ajuster l'acidité de l'alumine par ajout en milieu oxydant de chlore ou de composés organiques chlorés. Les traitements de régénération du catalyseur s'effectuent dans des conditions très sévères qui peuvent conduire à sa dégradation du fait de la température élevée et de la présence d'eau de combustion. Il est donc important de rechercher à augmenter la résistance des catalyseurs dans les conditions de régénération.

La présence d'un halogène, généralement le chlore, est indispensable pour que le catalyseur présente une fonction acide suffisante pour les réactions d'isomérisation des paraffines et naphtènes et pour les réactions de cyclisation des paraffines. En conditions réactionnelles, la teneur en chlore sur le catalyseur diminue du fait de la présence d'eau dans la charge et dans l'unité réactionnelle. L'eau entraîne les atomes de chlore les plus labiles créant plusieurs inconvénients. Le chlore élué traverse le lit de catalyseur et augmente la teneur en chlore sur le catalyseur situé en aval de ce lit. Il en résulte que la teneur en chlore sur le catalyseur n'est pas homogène dans l'ensemble du lit. Il se crée des zones qui présentent de plus fortes acidités et qui favorisent un craquage des hydrocarbures ainsi que le cokage du catalyseur. Une injection en continu de précurseur chloré dans l'unité est nécessaire pour maintenir un taux de chlore constant sur le catalyseur. Ce taux d'injection est d'autant plus élevé que la rétention en chlore du catalyseur est mauvaise. Or le chlore est une source de corrosion dans l'unité de reformage. Il est donc important de rechercher à augmenter la rétention en chlore du catalyseur.

La demanderesse a développé des catalyseurs de reformage à partir d'un support soufré auquel sont associés les métaux et dopants. Ces catalyseurs sont décrits dans la demande WO2009147313. Un des inconvénients de ces catalyseurs est qu'ils n'ont pas une rétention en chlore optimale.

La présente invention palie les inconvénients décrits ci-dessus. De façon surprenante, la demanderesse a constaté que des catalyseurs de reformage dont le support d'alumine comprend de faibles teneurs en soufre et en phosphore présentent une meilleure activité et sont plus stables. De plus, ils permettent d'obtenir un meilleur rendement en composés C5+. Les catalyseurs de l'invention ont donc une bonne sélectivité. Leurs utilisations dans un procédé de reformage présentent l'avantage d'injecter moins de chlore dans l'unité de reformage, donc de limiter les risques de corrosion et de réaliser un gain économique. Les catalyseurs étant plus stables et plus sélectifs, la formation de coke est également diminuée.

Un objet de l'invention est de fournir un catalyseur optimisé de reformage qui présente des performances catalytiques améliorées et une meilleure rétention en chlore. Le catalyseur de reformage optimisé selon l'invention comprenant au moins du platine, au moins un métal promoteur choisi parmi le groupe formé par le rhénium et l'iridium, au moins un halogène choisi parmi le groupe formé par le fluor, le chlore, le brome et l'iode, ledit catalyseur étant obtenu à partir d'au moins un support d'alumine dans lequel la teneur en soufre est comprise entre 500 et 1200 ppm poids par rapport au poids total du support, et la teneur en phosphore est comprise entre 0,04 et 1% poids par rapport au poids total du support.

Par faible teneur en soufre et en phosphore, on entend au sens de la présente invention un support d'alumine dont la teneur en soufre n'excède pas 1200 ppm poids par rapport au poids total du support et dont la teneur en phosphore n'excède pas 1 % poids du poids total du support, bornes comprises.

La teneur en phosphore dans le support d'alumine est comprise entre 0,04 et 1 % poids par rapport au poids total du support. Dans une seconde variante de l'invention, la teneur en phosphore dans le support d'alumine est comprise entre 0,05 et 0,8% poids par rapport au poids total du support. Dans une troisième variante de l'invention, la teneur en phosphore dans le support d'alumine est comprise entre 0,07 et 0,65 % poids par rapport au poids total du support.

La teneur en soufre dans le support d'alumine est comprise entre 500 et 1200 ppm poids par rapport au poids total du support. Dans une seconde variante de l'invention, la teneur en soufre dans le support d'alumine est comprise 530 et 1150 ppm poids par rapport au poids total du support. Dans une troisième variante de l'invention, la teneur en soufre dans le support d'alumine est comprise entre 550 et 1100 ppm poids par rapport au poids total du support. Dans une quatrième variante de l'invention, la teneur en soufre dans le support d'alumine est comprise entre 580 et 1050 ppm poids par rapport au poids total du support. Dans une cinquième variante de l'invention, la teneur en soufre dans le support d'alumine est comprise entre 580 et 950 ppm poids par rapport au poids total du support.

La teneur en platine par rapport au poids total du catalyseur est comprise entre 0,02 à 2 % poids, de manière préférée entre 0,05 et 1,5 % poids, de manière encore plus préférée entre 0,1 et 0,8 % poids.

Le ou les halogène(s) utilisé(s) pour acidifier le support d'alumine peuvent représenter 0,1 à 15% en poids par rapport au poids total du catalyseur, de préférence 0,2 à 5 % par rapport au poids total du catalyseur. De préférence, on utilise un seul halogène, en particulier le chlore. Lorsque le catalyseur comprend un seul halogène qui est le chlore, la teneur en chlore est comprise entre 0,5 et 2 % poids par rapport au poids total du catalyseur.

Le catalyseur selon l'invention peut comprendre, en outre, au moins un métal dopant choisi dans le groupe formé par le gallium, le germanium, l'indium, l'étain, l'antimoine, le thallium, le plomb, le bismuth, le titane, le chrome, le manganèse, le molybdène, le tungstène, le rhodium et le zinc.

La teneur de chaque métal dopant est comprise par rapport au poids total du catalyseur entre 0 à 2 % en poids, de préférence de 0,01 à 1 % en poids, de préférence entre de 0,01 à 0,7% en poids.

Le catalyseur comprend un ou plusieurs métaux promoteurs qui ont pour effet de promouvoir l'activité déshydrogénante du platine. Les métaux promoteurs sont choisis en fonction du mode d'utilisation du catalyseur. Ainsi, lorsque le catalyseur est destiné à être utilisé dans un procédé à lit fixe, le catalyseur peut comprendre au moins un métal promoteur choisi dans le groupe formé par le rhénium et l'iridium.

La teneur de chaque métal promoteur est comprise entre 0,02 et 10% poids par rapport au poids total du catalyseur, de préférence entre 0,05 et 5% poids, de manière encore plus préférée entre 0,1 et 2% poids.

Avant d'être utilisé dans une réaction de reformage, le catalyseur selon l'invention subit une étape de sulfuration. La teneur totale en soufre du catalyseur est comprise entre 700 et 1400 ppm, de préférence comprise entre 800 et 1200 ppm et de manière encore plus préférée entre 800 et 1100 ppm. Par "teneur totale en soufre", on entend au sens de la présente invention, la quantité totale de soufre présent sur le catalyseur final obtenu à l'issue de l'étape de sulfuration, le soufre pouvant être sous forme de sulfate et/ou de soufre à l'état réduit.

Le catalyseur dans le lit se présente sous forme de particules qui peuvent être des billes, des extrudés, éventuellement polylobes, des pastilles ou toute autre forme communément utilisée. De préférence, le catalyseur se présente sous forme d'extrudés.

Un deuxième objet de l'invention concerne l'utilisation d'un support d'alumine à faible teneur en soufre et en phosphore pour la fabrication d'un catalyseur de reformage.

Le support d'alumine utilisé pour la fabrication d'un catalyseur de reformage a une teneur en phosphore comprise entre 0,04 et 1% poids par rapport au poids total du support. Dans une seconde variante du deuxième objet de l'invention, le support utilisé pour la fabrication d'un catalyseur de reformage a une teneur en phosphore comprise entre 0,05 et 0,8% poids par rapport au poids total du support. Dans une troisième variante du deuxième objet de l'invention, le support utilisé pour la fabrication d'un catalyseur de reformage a une teneur en phosphore comprise entre 0,07 et 0,65% poids par rapport au poids total du support.

Le support d'alumine utilisé pour la fabrication d'un catalyseur de reformage a une teneur en soufre dans le support comprise entre 500 et 1200 ppm poids par rapport au poids total du support. Dans une seconde variante du deuxième objet de l'invention, le support utilisé pour la fabrication d'un catalyseur de reformage a une teneur en soufre comprise entre 530 et 1150 ppm poids par rapport au poids total du support. Dans une troisième variante du deuxième objet de l'invention, le support utilisé pour la fabrication d'un catalyseur de reformage a une teneur en soufre comprise entre 550 et 1100 ppm poids par rapport au poids total du support. Dans une quatrième variante du deuxième objet de l'invention, le support utilisé pour la fabrication d'un catalyseur de reformage a une teneur en soufre comprise entre 580 et 1050 ppm poids par rapport au poids total du support. Dans une cinquième du deuxième objet de l'invention, le support utilisé pour la fabrication d'un catalyseur de reformage a une teneur en soufre comprise entre 580 et 950 ppm poids par rapport au poids total du support.

Le support d'alumine à faible teneur en soufre et en phosphore selon l'invention (aussi appelé support d'alumine selon l'invention dans la suite du texte) peut être obtenu à partir des procédé suivants. Ces procédés sont donnés à titre d'exemples et sont nullement limitatifs.

Par exemple, on dépose sur un précurseur d'alumine du phosphore et du soufre. Le dépôt de phosphore et de soufre s'effectue par des techniques connues de l'homme du métier. Par exemple, le phosphore peut être déposé sur le précurseur d'alumine par technique d'imprégnation. On peut utiliser comme solution contenant du phosphore les solutions suivantes comme par exemple (exemple non limitatif) une solution de H₃PO₄, une solution de (NH₄)₂HPO₄, une solution de Na₂HPO₄, une solution de Na₃PO₄. Le soufre peut aussi être ajouté sur le précurseur d'alumine par une technique d'imprégnation. On utilise comme solution contenant du soufre les solutions suivantes comme par exemple (exemple non limitatif) une solution de H₂SO₄, une solution de Na₂SO₄, une solution de K₂SO₄. Le phosphore et le soufre peuvent être introduits sur le précurseur d'alumine séparément ou bien simultanément.

Le précurseur d'alumine, employé pour la préparation du support selon l'invention, est de préférence choisi dans le groupe formé par l'hydrargillite, la bayerite, la boehmite, les gels amorphes, les alumines dites de transition qui comportent au moins une phase prise dans le groupe comprenant les phases rhô, chi, eta, gamma, kappa, theta et alpha. De manière préférée, ledit précurseur d'alumine est une boehmite.

Le support selon l'invention peut aussi être obtenu à partir d'un mélange d'une source acide d'aluminium et d'une source basique d'aluminium de manière à précipiter un monohydrate d'aluminium de type boehmite. La source acide d'aluminium peut être par exemple, choisie parmi au moins un des composés suivants: le chlorure d'aluminium, le sulfate d'aluminium, le nitrate d'aluminium. La source basique d'aluminium peut être choisie parmi les sels basiques d'aluminium tels l'aluminate de sodium, l'aluminate de potassium. Les réactifs sont habituellement utilisés sous la forme de solutions aqueuses. La précipitation de l'hydrate d'aluminium est obtenue par contrôle du pH de la manière suivante :

Dans une première étape (a), une solution aqueuse de sulfate d'aluminium est ajoutée simultanément à une solution aqueuse d'aluminate de sodium à un pH compris entre 6 et 10 dans un bécher et sous une agitation à 350 rpm (rotation par minute). Le mélange s'effectue à une température maintenue constante pendant toute la durée de l'addition des solutions ; cette température est comprise entre 40-70°C. Le pH est également contrôlé pendant le mélange des deux solutions. Le contrôle du pH est réalisé par le choix des débits et des concentrations des deux solutions introduites dans le bécher. Les solutions sont ajoutées et mélangées pendant une période de 20 à 50 minutes jusqu'à ce que la concentration finale en alumine (Al₂O₃) du précurseur soit comprise entre 30 et 50 g.l⁻¹. L'agitation permet au produit issu de la réaction, c'est-à-dire le précipité d'hydrate d'aluminium, d'être en contact avec les réactifs de départ qui continuent d'être introduits dans le bécher et avec le précipité préalablement formé. Ces conditions expérimentales permettent d'obtenir une suspension d'un précurseur d'alumine ou précipité d'hydrate d'aluminium qui est sous forme de boehmite.

Dans une seconde étape (b), la suspension de précurseur d'alumine est vieillie. Cette étape s'effectue sous agitation à 350 rpm et à une température comprise entre 60 et 250°C pendant une durée de 5 min à 24 heures. Le pH pendant cette étape est ajusté entre 8,5 et 10. Au cours de cette étape de vieillissement, le pH est contrôlé par l'ajout d'une base choisie parmi le groupe formé par l'hydroxyde de sodium, l'hydroxyde de potassium, un hydroxyde d'ammonium quaternaire, l'ammoniaque, l'aluminate de sodium et l'aluminate de potassium.

Dans une troisième étape (c), la suspension vieillie est filtrée. La filtration s'effectue selon des techniques de filtration bien connues de l'homme du métier. On obtient un gâteau de filtration qui est ensuite lavé avec 3 à 6 fois son volume d'eau. Cette étape de lavage permet d'éliminer certaines impuretés indésirables et d'obtenir un précurseur d'alumine soufré.

Dans une quatrième étape (d), une solution contenant du phosphore tel que par exemple (exemple non limitatif) une solution de H₃PO₄, ou une solution de (NH₄)₂HPO₄, ou une solution Na₂HPO₄, ou une solution de Na₃PO₄ est déposée sur le précurseur d'alumine par technique d'imprégnation.

Le précurseur d'alumine comprenant du soufre et du phosphore est utilisé pour la préparation de catalyseurs ou de supports de catalyseur de reformage. Cette préparation consiste à mettre en forme ledit précurseur d'alumine, puis le calciner (étape e). La mise en forme peut être réalisée par toute méthode connue telle que par exemple, le malaxage/extrusion, la mise en forme par égouttage (oil-drop), la granulation, le compactage, l'atomisation. Le précurseur d'alumine comprenant du soufre et du phosphore et mis en forme est ensuite calciné à une température qui est comprise entre 500°C et 830°C. On obtient ainsi un support d'alumine à faible teneur en soufre selon l'invention.

Le support selon l'invention a une surface spécifique comprise entre 150 et 400 m²/g, de préférence entre 150 et 300 m²/g, de manière encore plus préférée entre 160 et 250 m²/g. Le volume des pores de diamètre inférieur à 10 microns est compris entre 0,2 et 1 cc/g, de manière préférée entre 0,4 et 0,9 cc/g. Le diamètre moyen des mésopores (pores de diamètre entre 2 et 50 nm) est compris entre 5 et 20 nm, de manière préférée entre 7 et 16 nm.

Le catalyseur de l'invention peut être préparé par dépôt de ses différents constituants sur le support d'alumine comprenant du soufre et du phosphore selon l'invention. Le dépôt de chaque constituant peut être effectué sur le support d'alumine selon l'invention avant ou après mise en forme de celui-ci. Les constituants peuvent être introduits successivement dans n'importe quel ordre, à partir d'une solution ou de solutions distinctes. Dans ce dernier cas, on peut procéder à des séchages et/ou des calcinations intermédiaires.

Le dépôt des différents constituants du catalyseur peut être effectué par des techniques classiques, en phase liquide ou en phase gazeuse, à partir de composés précurseurs appropriés. Lorsque le dépôt est effectué sur le support d'alumine selon l'invention et mis en forme, les techniques employées peuvent être par exemple l'imprégnation à sec, l'imprégnation par excès de solution. Des étapes de lavage et/ou séchage et/ou calcination peuvent éventuellement être menées avant chaque nouvelle étape d'imprégnation.

Après mise en forme du support selon l'invention et le dépôt de tous les constituants, on procède à un traitement thermique final entre 300 et 1000°C, qui peut ne comporter qu'une seule étape à une température de 400 à 900°C de préférence, et sous atmosphère contenant de l'oxygène, et de préférence en présence d'oxygène libre ou d'air. Ce traitement correspond au séchage-calcination suivant le dépôt du dernier constituant.

Le dépôt du platine peut être effectué par des techniques classiques, notamment l'imprégnation à partir d'une solution aqueuse ou organique d'un précurseur du platine ou contenant un sel ou un composé du platine. A titre d'exemple de sels ou de composés utilisables, on peut citer l'acide hexachloroplatinique, les composés ammoniaqués, le chloroplatinate d'ammonium, le chlorure de platine, le dichlorure de platine dicarbonyle et l'acide hexahydroxyplatinique. Les composés ammoniaqués peuvent être par exemple les sels de platine Il tetraamines de formule Pt(NH₃)₄X₂, les sels de platine IV halogénopentamines de formule (Pt(NH₃)₅)X₃, les sels de platine tétrahalogénodiamines de formule PtX₄(NH₃)₂X, les complexes de platine avec les halogènes-polycétones et les composés halogénés de formule H (Pt(acac)₂X) dans lesquels l'élément X est un halogène choisi dans le groupe formé par le chlore, le fluor, le brome et l'iode, et de préférence le chlore, et le groupe acac représente le reste de formule C₅H₇O₂ dérivé de l'acétylacétone. Parmi les solvants organiques utilisables, on peut citer les hydrocarbures paraffiniques, naphténiques ou aromatiques, et les composés organiques halogénés ayant par exemple 1 à 12 atomes de carbone par molécule. On peut citer par exemple le n-heptane, le méthylcyclohexane, le toluène et le chloroforme. On peut aussi utiliser des mélanges de solvants. Le dépôt du platine peut intervenir à tout moment lors de la préparation du catalyseur. Il peut être effectué isolément ou simultanément au dépôt d'autres constituants, par exemple du ou des métaux promoteurs.

Le dépôt du ou des dopants et/ou du ou des promoteurs peut être effectué également par des techniques classiques à partir de composés précurseurs tels que les halogénures, les nitrates, les sulfates, les acétates, les tartrates, les citrates, les carbonates, les oxalates des métaux dopants et les complexes du type amine. Tout autre sel ou oxyde de ces métaux soluble dans l'eau, les acides, ou dans un autre solvant approprié, convient également comme précurseur. A titre d'exemples de tels précurseurs, on peut ainsi citer l'acide perrhénique, les perrhénates, les chromates, les molybdates et les tungstates. On peut aussi introduire le ou les dopants, par mélange d'une solution aqueuse de leur(s) composé(s) précurseur(s) avec le support selon l'invention avant sa mise en forme.

Le dépôt du ou des dopants et/ou du ou des promoteurs peut être effectué à l'aide d'une solution d'un composé organométallique desdits métaux dans un solvant organique. Dans ce cas, on effectue par exemple ce dépôt après celui du platine, puis on calcine le solide et on effectue éventuellement une réduction sous hydrogène pur ou dilué à haute température, par exemple entre 300 et 500°C. Les composés organométalliques sont choisis dans le groupe constitué par les complexes dudit métal promoteur et les hydrocarbylmétaux tels que les alkyl, cycloalkyl, aryl, alkylaryl et arylalkyl métaux. On peut également employer des composés du type alcoolate ou des composés organohalogénés. On peut citer en particulier le tétrabutylétain dans le cas où le métal dopant est l'étain, et le triphénylindium dans le cas où le métal dopant est l'indium. Le solvant d'imprégnation peut être choisi dans le groupe constitué par les hydrocarbures paraffiniques, naphténiques ou aromatiques contenant de 6 à 12 atomes de carbone par molécule et les composés organiques halogénés contenant de 1 à 12 atomes de carbone par molécule. On peut citer par exemple le n-heptane, le méthylcyclohexane et le chloroforme. On peut aussi utiliser des mélanges des solvants définis ci-dessus.

L'halogène, de manière préférée le chlore, peut être introduit dans le catalyseur en même temps qu'un autre constituant métallique, par exemple dans les cas où on utilise un halogénure comme composé précurseur du métal de la famille du platine, du métal promoteur ou du métal dopant.

L'halogène peut également être ajouté au moyen d'une imprégnation par une solution aqueuse de l'acide correspondant, par exemple l'acide chlorhydrique, à tout moment de la préparation. Un protocole typique consiste à imprégner le solide de façon à introduire la quantité d'halogène souhaitée. Le catalyseur est maintenu en contact avec la solution aqueuse pendant au moins 30 minutes pour déposer cette quantité d'halogène.

Le chlore peut également être ajouté au catalyseur selon l'invention au moyen d'un traitement d'oxychloration. Un tel traitement peut par exemple être effectué entre 350 et 550°C pendant deux heures sous un débit d'air contenant la quantité de chlore souhaitée et contenant éventuellement de l'eau.

Lorsque les divers précurseurs utilisés dans la préparation du catalyseur selon l'invention ne contiennent pas d'halogène ou contiennent de l'halogène en quantité insuffisante, il peut être nécessaire d'ajouter un composé halogéné lors de la préparation. Tout composé connu de l'homme de métier peut être utilisé et incorporé à l'une quelconque des étapes de préparation du catalyseur selon l'invention. En particulier, il est possible d'utiliser des composés organiques tels que des halogénures de méthyle ou d'éthyle, par exemple du dichlorométhane, du chloroforme, du dichloroéthane, du méthylchloroforme ou du tétrachlorure de carbone.

Avant son utilisation, le catalyseur est soumis à un traitement sous hydrogène et à un traitement à l'aide d'un précurseur soufré afin d'obtenir une phase métallique active et sélective. La procédure de ce traitement sous hydrogène, aussi appelée réduction sous hydrogène, consiste à maintenir le catalyseur dans un courant d'hydrogène pur ou dilué à une température comprise entre 100 et 600°C, et de préférence entre 200 et 580°C, pendant 30 minutes à 6 heures. Cette réduction peut être effectuée aussitôt après la calcination, ou plus tard chez l'utilisateur. Il est aussi possible de réduire directement le produit séché chez l'utilisateur. La procédure de traitement à l'aide d'un précurseur soufré s'effectue après la réduction. Elle permet d'obtenir un catalyseur sulfuré dont la teneur totale en soufre est comprise entre 700 et 1600 ppm par rapport au poids total du catalyseur, de préférence entre 800 et 1400 ppm et de manière encore plus préférée entre 800 et 1300 ppm. Le traitement au soufre (aussi appelé sulfuration) s'effectue par toute méthode bien connue de l'homme du métier. Par exemple, le catalyseur selon l'invention sous forme réduite est mis en contact avec un précurseur soufré pendant 1 heure à une température entre 450 et 580°C en présence d'hydrogène pur ou dilué. Le précurseur soufré peut être du disulfure de diméthyle, du sulfure de dihydrogène, des mercaptans légers, des sulfures organiques comme par exemple le diméthyldisulfure.

Ainsi, selon un exemple non limitatif, on peut préparer le catalyseur par un procédé de fabrication comprenant les étapes suivantes :
1) on prépare un support d'alumine comprenant du soufre et du phosphore selon les étapes (a) à (e) précédemment décrites,
2) on imprègne le support d'alumine comprenant du soufre et du phosphore avec au moins une solution d'au moins un précurseur du platine,
3) on imprègne le support obtenu à l'étape précédente avec au moins une solution d'au moins un précurseur de métal promoteur,
4) on imprègne le support obtenu à l'étape précédente avec au moins une solution d'au moins un métal dopant, cette étape est optionnelle,
5) on sèche et calcine le support obtenu à l'étape précédente pour obtenir un catalyseur sous forme d'oxyde,
6) on réduit sous hydrogène pur le catalyseur sous forme d'oxyde obtenu à l'étape précédente à une température comprise par exemple entre 100 et 600°C et pendant 30 minutes à 6 heures pour obtenir un catalyseur réduit,
7) on met en contact le catalyseur réduit obtenu à l'étape précédente avec au moins un précurseur soufré par exemple, pendant au moins une heure à une température comprise entre 450° et 580°C.

Les étapes (2), (3) et (4) dont l'ordre peut être inversé, peuvent être effectuées simultanément ou successivement. Au moins une des étapes (2), (3) et (4) peut être effectuée avant l'étape de mise en forme (e) du support.

Un troisième objet de l'invention concerne un procédé de reformage dans lequel on met en contact une charge hydrocarbonée avec le catalyseur selon l'invention et dans des conditions réactionnelles pour obtenir des composés aromatiques.

Les procédés de reformage permettent d'augmenter l'indice d'octane des fractions essences provenant de la distillation du pétrole brut et/ou d'autres procédés de raffinage. Les procédés de production d'aromatiques fournissent les bases (benzène, toluène et xylène) utilisables en pétrochimie. Ces procédés revêtent un intérêt supplémentaire en contribuant à la production de quantités importantes d'hydrogène indispensable pour les procédés d'hydrotraitement de la raffinerie. Ces deux types de procédé se différencient par le choix des conditions opératoires et éventuellement par la composition de la charge.

La charge hydrocarbonée contient des hydrocarbures paraffiniques, naphténiques et aromatiques contenant de 6 à 12 atomes de carbone par molécule. Cette charge est définie, entre autres, par sa densité et sa composition pondérale.

Selon le troisième objet de l'invention, les conditions réactionnelles de mise en contact ladite charge hydrocarbonée avec ledit catalyseur de la présente invention sont une température comprise entre 400 et 700°C, une pression comprise entre 0,1 et 4 MPa et un débit massique de charge traitée par unité de masse de catalyseur et par heure compris entre 0,1 et 10 h⁻¹. Une partie de l'hydrogène produit est recyclé selon un taux de recyclage molaire (débit d'hydrogène recyclé sur débit de charge) compris entre 0,1 et 8.

Dans une variante du troisième objet de l'invention, le procédé de reformage des essences selon l'invention s'effectue en lit fixe et par une mise en contact d'une charge hydrocarbonée avec le catalyseur selon l'invention à une température comprise entre 350 et 550°C, une pression comprise entre 1 et 3 MPa, un débit massique horaire comprise entre 0,5 et 6 h⁻¹. Une partie de l'hydrogène produit est recyclé selon un taux de recyclage molaire (débit d'hydrogène recyclé sur débit de charge) compris entre 2 et 7.

L'invention va maintenant être décrite dans les exemples de réalisation suivants donnés à titre illustratif et non limitatif.

### EXEMPLES

### Exemple 1 Synthèse des catalyseurs.

### 1a) Préparation du catalyseur A (non-conforme)

Le support est une alumine gamma issue d'une boehmite commerciale appelée Versal™ 250 qui contient moins de 20 ppm poids de soufre élémentaire (limite de détection par fluorescence X).

20 g de ce support sont mis en contact avec 100 cm³ d'une solution aqueuse d'acide chlorhydrique et d'acide hexachloroplatinique comprenant 0,07 g de platine. La quantité d'acide chlorhydrique est ajustée afin d'avoir une teneur en chlore de 1,1% poids dans le catalyseur final. La solution d'imprégnation est alors soutirée. 60 cm³ d'une solution aqueuse comprenant 0,11 g de rhénium introduit sous forme de perrhénate d'ammonium sont mis en contact avec le support obtenu à l'issue de l'étape précédente pendant 3 heures. La solution d'imprégnation est alors soutirée. Le catalyseur ainsi obtenu est séché 1 heure à 120°C, calciné pendant 2 heures à 520 °C puis réduit sous hydrogène 2 heures à 520°C. Le catalyseur est alors sulfuré avec un mélange hydrogénées (1 %vol. d'H₂S) pendant 14 minutes à 520°C (débit: 0,15 I/min en conditions NTP; conditions Normales de Température et de Pression).

Le catalyseur final contient 0,30 % poids de platine, 0,35% poids de rhénium, 1,1 % poids de chlore. Il a une teneur totale en soufre de 950 ppm poids par rapport au poids total du catalyseur.

### 1b) Préparation du catalyseur B (non-conforme)

Le support est une alumine gamma issue d'une boehmite commerciale appelée Versal™ 250 qui contient moins de 20 ppm poids de soufre élémentaire (limite de détection par fluorescence X). Cette alumine est imprégnée avec par une solution aqueuse d'acide phosphorique puis séchée. La concentration en phosphore de la solution d'acide phosphorique est telle qu'après calcination le support présente une teneur en phosphore de 0,25% poids par rapport au poids total du support.

20 g de ce support sont mis en contact avec 100 cm³ d'une solution aqueuse d'acide chlorhydrique et d'acide hexachloroplatinique comprenant 0,07 g de platine. La quantité d'acide chlorhydrique est ajustée afin d'avoir une teneur en chlore de 1,1% poids dans le catalyseur final. La solution d'imprégnation est alors soutirée. 60 cm³ d'une solution aqueuse comprenant 0,11 g de rhénium introduit sous forme de perrhénate d'ammonium sont mis en contact avec le support obtenu à l'issue de l'étape précédente pendant 3 heures. La solution d'imprégnation est alors soutirée. Le catalyseur ainsi obtenu est séché 1 heure à 120°C, calciné pendant 2 heures à 520 °C puis réduit sous hydrogène 2 heures à 520°C. Le catalyseur est alors sulfuré avec un mélange hydrogène/H₂S (1 % vol. d'H₂S) pendant 14 minutes à 520°C (débit: 0.15 l/min en conditions NTP).

Le catalyseur final contient 0,30 % poids de platine, 0,35 % poids de rhénium, 1,1 % poids de chlore, 0,25 % de phosphore. Il a une teneur totale en soufre de 950 ppm poids par rapport au poids total du catalyseur.

### 1c) Préparation du catalyseur C (non conforme)

Un support d'alumine gamma est obtenu par ajout simultané d'une solution de sulfate d'aluminium à une solution d'aluminate de sodium. Le pH est maintenu à 9 pendant l'ajout des deux solutions de manière à obtenir un précurseur d'alumine dont la concentration finale en alumine est de 50 g.l⁻¹. La bouillie obtenue est vieillie pendant 3 heures en maintenant le pH à 9. Elle est ensuite filtrée, lavée et atomisée, extrudée et calcinée à 720°C. L'étape de lavage avant l'atomisation est réalisée de sorte à atteindre une teneur en soufre de 870 ppm poids après calcination et avant l'étape de sulfuration.

20 g de ce support sont mis en contact avec 100 cm³ d'une solution aqueuse d'acide chlorhydrique et d'acide hexachloroplatinique comprenant 0,07 g de platine. La quantité d'acide chlorhydrique est ajustée afin d'avoir une teneur en chlore de 1,1 % poids dans le catalyseur final. La solution d'imprégnation est alors soutirée. 60 cm³ d'une solution aqueuse comprenant 0,11 g de rhénium introduit sous forme de perrhénate d'ammonium sont mis en contact avec le support obtenu à l'issue de l'étape précédente pendant 3 heures. La solution d'imprégnation est alors soutirée. Le catalyseur ainsi obtenu est séché 1 heure à 120°C, calciné pendant 2 heures à 520 °C puis réduit sous hydrogène 2 heures à 520°C. Le catalyseur est alors sulfuré avec un mélange hydrogène/H₂S (1% vol. d'H₂S) pendant 9 minutes à 520°C (débit: 0.15 l/min en conditions NTP).

Le catalyseur final contient 0,30 % poids de platine, 0,35% poids de rhénium, 1,1 % poids de chlore. Il a une teneur totale en soufre de 950 ppm poids par rapport au poids total du catalyseur.

### 1d) Préparation du catalyseur D (non conforme)

Un support d'alumine gamma est obtenu par ajout simultané d'une solution de sulfate d'aluminium à une solution d'aluminate de sodium. Le pH est maintenu à 9 lors de l'ajout des deux solutions de manière à obtenir un précurseur d'alumine dont la concentration finale en alumine est de 50 g.l⁻¹. La bouillie obtenue est vieillie pendant 3 heures en maintenant le pH à 9. Elle est ensuite filtrée, lavée et atomisée. La poudre obtenue est imprégnée par une solution aqueuse d'acide phosphorique puis séchée. La concentration en phosphore de la solution d'acide phosphorique est telle qu'après calcination le support présente une teneur en phosphore de 0,25 % poids par rapport au poids total du support. Ensuite la poudre est extrudée et calcinée à 740°C. L'étape de lavage avant l'atomisation est réalisée de sorte à atteindre une teneur en soufre de 1250 ppm poids sur le support après calcination et avant l'étape de sulfuration.

20 g de ce support sont mis en contact avec 100 cm³ d'une solution aqueuse d'acide chlorhydrique et d'acide hexachloroplatinique comprenant 0,07 g de platine. La quantité d'acide chlorhydrique est ajustée afin d'avoir une teneur en chlore de 1,1% poids dans le catalyseur final. La solution d'imprégnation est alors soutirée. 60 cm³ d'une solution aqueuse comprenant 0,11 g de rhénium introduit sous forme de perrhénate d'ammonium sont mis en contact avec le support obtenu à l'issue de l'étape précédente pendant 3 heures. La solution d'imprégnation est alors soutirée. Le catalyseur ainsi obtenu est séché 1 heure à 120°C, calciné pendant 2 heures à 520 °C puis réduit sous hydrogène 2 heures à 520°C. Le catalyseur est alors sulfuré avec un mélange hydrogène/H₂S (1% vol. d'H₂S) pendant 9 minutes à 520°C (débit: 0.15 l/min en conditions NTP).

Le catalyseur final contient 0,30 % poids de platine, 0,35% poids de rhénium, 1,1 % poids de chlore, 0,25 % poids de phosphore. Il a une teneur totale en soufre de 1290 ppm poids par rapport au poids total du catalyseur.

### 1e) Préparation du catalyseur E (non conforme)

Le support d'alumine gamma est obtenu par ajout simultané d'une solution de sulfate d'aluminium à une solution d'aluminate de sodium. Le pH de la solution est maintenu à 9 pendant l'ajout des deux solutions de manière à obtenir un précurseur d'alumine dont la concentration finale en alumine est de 50 g.l⁻¹. La bouillie obtenue est vieillie pendant 3 heures en maintenant le pH à 9. Elle est ensuite filtrée, lavée et atomisée. La poudre obtenue est imprégnée par une solution aqueuse d'acide phosphorique puis séchée. Elle est ensuite extrudée et calcinée à 740°C. L'étape de lavage avant atomisation est réalisée de sorte à atteindre une teneur en soufre de 450 ppm poids sur le support après calcination et avant l'étape de sulfuration. La concentration en phosphore de la solution d'acide phosphorique est telle qu'après calcination le support présente une teneur en phosphore de 0,25 % poids.

20 g de support sont mis en contact avec 100 cm³ d'une solution aqueuse d'acide chlorhydrique et d'acide hexachloroplatinique comprenant 0,07 g de platine. La quantité d'acide chlorhydrique est ajustée afin d'avoir une teneur en chlore de 1,1% poids dans le catalyseur final. La solution d'imprégnation est alors soutirée. 60 cm³ d'une solution aqueuse comprenant 0,11 g de rhénium introduit sous forme de perrhénate d'ammonium sont mis en contact avec le support obtenu à l'issue de l'étape précédente pendant 3 heures. La solution d'imprégnation est alors soutirée. Le catalyseur ainsi obtenu est séché 1 heure à 120°C, calciné pendant 2 heures à 520 °C puis réduit sous hydrogène 2 heures à 520°C. Le catalyseur est alors sulfuré avec un mélange hydrogène/H₂S (1 %vol. d'H₂S) pendant 9 minutes à 520°C (débit: 0,15 l/min en conditions NTP).

Le catalyseur final contient 0,30 % poids de platine, 0,35% poids de rhénium, 1,1 % poids de chlore et 0,25 % poids de phosphore. Il a une teneur finale en soufre de 990 ppm poids par rapport au poids total du catalyseur.

### 1f) Préparation du catalyseur F (non conforme)

Le support d'alumine gamma est obtenu par ajout simultané d'une solution de sulfate d'aluminium à une solution d'aluminate de sodium. Le pH est maintenu à 9 pendant l'ajout des deux solutions de manière à obtenir un précurseur d'alumine dont la concentration finale en alumine est de 50 g.l⁻¹. La bouillie obtenue est vieillie pendant 3 heures en maintenant le pH à 9. Elle est ensuite filtrée, lavée et atomisée. La poudre obtenue est imprégnée par une solution aqueuse d'acide phosphorique puis séchée. Elle est ensuite extrudée et calcinée à 780°C. L'étape de lavage avant atomisation est réalisée de sorte à atteindre une teneur en soufre de 870 ppm poids sur le support après calcination et avant l'étape de sulfuration. La concentration en phosphore de la solution d'acide phosphorique est telle qu'après calcination le support présente une teneur en phosphore de 1,30 % poids.

20 g de support sont mis en contact avec 100 cm³ d'une solution aqueuse d'acide chlorhydrique et d'acide hexachloroplatinique comprenant 0,07 g de platine. La quantité d'acide chlorhydrique est ajustée afin d'avoir une teneur en chlore de 1,1% poids dans le catalyseur final. La solution d'imprégnation est alors soutirée. 60 cm³ d'une solution aqueuse comprenant 0,11 g de rhénium introduit sous forme de perrhénate d'ammonium sont mis en contact avec le support obtenu à l'issue de l'étape précédente pendant 3 heures. La solution d'imprégnation est alors soutirée. Le catalyseur ainsi obtenu est séché 1 heure à 120°C, calciné pendant 2 heures à 520 °C puis réduit sous hydrogène 2 heures à 520°C. Le catalyseur est alors sulfuré avec un mélange hydrogène/H₂S (1 %vol. d'H₂S) pendant 9 minutes à 520°C (débit: 0,15 l/min en conditions NTP).

Le catalyseur final contient 0,30 % poids de platine, 0,35% poids de rhénium, 1,1 % poids de chlore et 1,30 % poids de phosphore. Il a une teneur finale en soufre de 950 ppm poids par rapport au poids total du catalyseur.

### 1 g) Préparation du catalyseur I1 (conforme)

Un support d'alumine gamma est obtenu par ajout simultané d'une solution de sulfate d'aluminium à une solution d'aluminate de sodium. Le pH est maintenu à 9 pendant l'ajout des deux solutions de manière à obtenir un précurseur d'alumine dont la concentration finale en alumine est de 50 g.l⁻¹. La bouillie obtenue est vieillie pendant 3 heures en maintenant le pH à 9. Elle est ensuite filtrée, lavée et atomisée. La poudre obtenue est imprégnée par une solution aqueuse d'acide phosphorique puis séchée. Elle est ensuite extrudée et calcinée à 740°C. La concentration en phosphore de la solution d'acide phosphorique est telle qu'après calcination le support présente une teneur en phosphore de 0,25 % poids. L'étape de lavage avant l'atomisation est réalisée de sorte à atteindre une teneur en soufre de 590 ppm poids. Le support, après calcination et avant sulfuration, a donc une teneur en soufre de 590 ppm poids et une teneur en phosphore de 0,25% poids par rapport au poids total du support.

20 g ce de support sont mis en contact avec 100 cm³ d'une solution aqueuse d'acide chlorhydrique et d'acide hexachloroplatinique comprenant 0,07 g de platine. La quantité d'acide chlorhydrique est ajustée afin d'avoir une teneur en chlore de 1,1 % poids dans le catalyseur final. La solution d'imprégnation est alors soutirée. 60 cm³ d'une solution aqueuse comprenant 0,11 g de rhénium introduit sous forme de perrhénate d'ammonium sont mis en contact avec le support obtenu à l'issue de l'étape précédente pendant 3 heures. La solution d'imprégnation est alors soutirée. Le catalyseur ainsi obtenu est séché 1 heure à 120°C, calciné pendant 2 heures à 500 °C puis réduit sous hydrogène 2h à 500°C. Le catalyseur est alors sulfuré avec un mélange hydrogène/H₂S (1 %vol. d'H₂S) pendant 9 minutes à 520°C (débit: 0,15 l/min en conditions NTP).

Le catalyseur final contient 0,30 % poids de platine, 0,35 % poids de rhénium, 1,1 % poids de chlore et 0,25 % poids de phosphore. Il a une teneur totale en soufre de 1020 ppm poids de soufre par rapport au poids total du catalyseur.

### 1h) Préparation du catalyseur 12 (conforme)

Un support d'alumine gamma est obtenu par ajout simultané d'une solution de sulfate d'aluminium à une solution d'aluminate de sodium. Le pH est maintenu à 9 pendant l'ajout des deux solutions de manière à obtenir un précurseur d'alumine dont la concentration finale en alumine est de 50 g.l⁻¹. La bouillie obtenue est vieillie pendant 3 heures en maintenant le pH à 9. Elle est ensuite filtrée, lavée et atomisée. La poudre obtenue est imprégnée par une solution aqueuse d'acide phosphorique puis séchée. Elle est ensuite extrudée et calcinée à 740°C. La concentration en phosphore de la solution d'acide phosphorique est telle qu'après calcination le support présente une teneur en phosphore de 0,25% poids. L'étape de lavage avant l'atomisation est réalisée de sorte à atteindre une teneur en soufre de 870 ppm poids. Le support, après calcination et avant sulfuration, a donc une teneur en soufre de 870 ppm poids et une teneur en phosphore de 0,25% poids par rapport au poids total du support.

20 g de ce support sont mis en contact avec 100 cm³ d'une solution aqueuse d'acide chlorhydrique et d'acide hexachloroplatinique comprenant 0,07 g de platine. La quantité d'acide chlorhydrique est ajustée afin d'avoir une teneur en chlore de 1,1% poids dans le catalyseur final. La solution d'imprégnation est alors soutirée. 60 cm³ d'une solution aqueuse comprenant 0,11 g de rhénium introduit sous forme de perrhénate d'ammonium sont mis en contact avec le support obtenu à l'issue de l'étape précédente pendant 3 heures. La solution d'imprégnation est alors soutirée. Le catalyseur ainsi obtenu est séché 1 heure à 120°C, calciné pendant 2 heures à 500 °C puis réduit sous hydrogène 2 heures à 500°C. Le catalyseur est alors sulfuré avec un mélange hydrogène/H₂S (1 %vol. d'H₂S) pendant 9 minutes à 520°C (débit: 0,15 l/min en conditions NTP).

Le catalyseur final contient 0,30 % poids de platine, 0,35 % poids de rhénium, 1,1 % poids de chlore et 0,25 % poids de phosphore. Il a une teneur en soufre finale de 950 ppm poids par rapport au poids total du catalyseur.

### 1i) Préparation du catalyseur 13 (conforme)

Un support d'alumine gamma est obtenu par ajout simultané d'une solution de sulfate d'aluminium à une solution d'aluminate de sodium. Le pH est maintenu à 9 pendant l'ajout des deux solutions de manière à obtenir un précurseur d'alumine dont la concentration finale en alumine est de 50 g.l⁻¹. La bouillie obtenue est vieillie pendant 3 heures en maintenant le pH à 9. Elle est ensuite filtrée, lavée et atomisée. La poudre obtenue est imprégnée par une solution aqueuse d'acide phosphorique puis séchée. Elle est ensuite extrudée et calcinée à 740 °C. La concentration en phosphore de la solution d'acide phosphorique est telle qu'après calcination le support présente une teneur en phosphore de 0,25 % poids. L'étape de lavage avant atomisation est réalisée de sorte à atteindre une teneur en soufre de 870 ppm poids. Le support, après calcination et avant sulfuration, a donc une teneur en soufre de 870 ppm poids et une teneur en phosphore de 0,25% poids par rapport au poids total du support.

20 g de ce support sont mis en contact pendant 3 heures avec 100 cm³ d'une solution aqueuse d'acide chlorhydrique et de nitrate d'indium comprenant 0,03 g d'indium et 0,2 g de chlore. La solution d'imprégnation est alors soutirée. Le solide ainsi obtenu est séché 1 heure à 120°C puis calciné pendant 2 heures à 450 °C. 100 cm³ d'une solution aqueuse d'acide hexachloroplatinique comprenant 0,07 g de platine sont ensuite mis en contact avec le support obtenu à l'issue de l'étape précédente pendant 3 heures. La quantité d'acide chlorhydrique est ajustée afin d'avoir une teneur en chlore de 1,1% poids dans le catalyseur final. La solution d'imprégnation est alors soutirée. 60 cm³ d'une solution aqueuse comprenant 0,09 g de rhénium introduit sous forme de perrhénate d'ammonium sont ensuite mis en contact avec le support obtenu à l'issue de l'étape précédente pendant 3 heures. La solution d'imprégnation est alors soutirée. Le catalyseur ainsi obtenu est séché 1 heure à 120°C, calciné pendant 2 heures à 520 °C puis réduit sous hydrogène 2 heures à 520 °C. Le catalyseur est alors sulfuré avec un mélange hydrogène/H₂S (1%vol. d'H₂S) pendant 9 minutes à 520°C (débit: 0,15 l/min en conditions NTP).

Le catalyseur final contient 0,30 % poids de platine, 0,30% poids de rhénium, 0,10 % poids d'indium, 1,1 % poids de chlore et 0,25 % poids de phosphore. Il a une teneur finale en soufre de 950 ppm poids par rapport au poids total du catalyseur.

### 1j) Préparation du catalyseur 14 (conforme)

Un support d'alumine gamma est obtenu par ajout simultané d'une solution de sulfate d'aluminium à une solution d'aluminate de sodium. Le pH est maintenu à 9 pendant l'ajout des deux solutions de manière à obtenir un précurseur d'alumine dont la concentration finale en alumine est de 50 g.l⁻¹. La bouillie obtenue est vieillie pendant 3 heures en maintenant le pH à 9. Elle est ensuite filtrée, lavée et atomisée. La poudre obtenue est imprégnée par une solution aqueuse d'acide phosphorique puis séchée. Elle est ensuite extrudée et calcinée à 740°C. La concentration en phosphore de la solution d'acide phosphorique est telle qu'après calcination le support présente une teneur en phosphore de 0,25% poids. L'étape de lavage avant l'atomisation est réalisée de sorte à atteindre une teneur en soufre de 870 ppm poids sur le support après calcination et avant l'étape de sulfuration. Le support, après calcination et avant sulfuration, a donc une teneur en soufre de 870 ppm poids et une teneur en phosphore de 0,25% poids par rapport au poids total du support.

20 g de ce support sont mis en contact pendant 3 heures avec 100 cm³ d'une solution aqueuse d'acide chlorhydrique et de chlorure d'étain(II) comprenant 0,045g d'étain et 0,2g de chlore. La solution d'imprégnation est alors soutirée. Le solide ainsi obtenu est séché 1 heure à 120°C puis calciné pendant 2 heures à 450°C. 100 cm³ d'une solution aqueuse d'acide chlorhydrique et d'acide hexachloroplatinique comprenant 0,07 g de platine sont ensuite mis en contact avec le support obtenu à l'issue de l'étape précédente pendant 3 heures. La quantité d'acide chlorhydrique est ajustée afin d'avoir une teneur en chlore de 1,1 % poids dans le catalyseur final. La solution d'imprégnation est alors soutirée. 60 cm³ d'une solution aqueuse comprenant 0,09 g de rhénium introduit sous forme de perrhénate d'ammonium sont ensuite mis en contact avec le support obtenu à l'issue de l'étape précédente pendant 3 heures. La solution d'imprégnation est alors soutirée. Le catalyseur ainsi obtenu est séché 1 heure à 120 °C, calciné pendant 2 heures à 520 °C puis réduit sous hydrogène 2 heures à 520 °C. Le catalyseur est alors sulfuré avec un mélange hydrogène/H₂S (1 %vol. d'H₂S) pendant 9 minutes à 520 °C (débit: 0,15 l/min en conditions NTP).

Le catalyseur final contient 0,30 % poids de platine, 0,30 % poids de rhénium, 0,15 % poids d'étain, 1,1 % poids de chlore et 0,25 % poids de phosphore. Il a une teneur finale en soufre de 950 ppm poids par rapport au poids total du catalyseur.

### Exemple 2 : tests catalytiques

Les catalyseurs A à F et I1 à I4 sont testés pour la transformation d'une charge hydrocarbonée de type naphtha issue de la distillation de pétrole, dont les caractéristiques sont les suivantes :

| | | |
|---|---|---|
| densité à 15°C | 0,747 | kg/dm³ |
| paraffines / naphtènes / aromatiques | 57/32/11 | % vol |

Cette transformation est réalisée dans une unité de test pilote en lit traversé en présence d'hydrogène. Le test est conduit en utilisant les conditions opératoires suivantes :
pression totale : 1,2 MPa
débit de charge : 3 kg par kg de catalyseur par heure
indice d'octane recherche : 102
rapport molaire hydrogène recyclé sur charge hydrocarbonée : 3,5.

Les performances obtenues après 180 h de fonctionnement sont reportées dans le tableau 1, à savoir la température nécessaire pour atteindre l'indice d'octane recherche visé, représentatif de l'activité du catalyseur, et les rendements pondéraux en reformat C5+ (hydrocarbures contenant au moins 5 atomes de carbone) et C4- (hydrocarbures contenant de 1 à 4 atomes de carbone), représentatifs de la sélectivité du catalyseur.

Tous les tests des catalyseurs ont été réalisés à une température variable mais permettant d'obtenir un indice d'octane recherche (indice RON) constant et égal à 102.

**Tableau 1**

| Catalyseur | Température (°C) | Rendement C5+ (% poids) | Rendement C4- (% poids) |
|---|---|---|---|
| A | 496,0 | 84,3 | 12,9 |
| B | 495,5 | 84,1 | 13,1 |
| C | 501,5 | 84,0 | 13,0 |
| D | 500,5 | 86,9 | 10,2 |
| E | 497,0 | 84,9 | 12,3 |
| F | 499,5 | 86,6 | 11,4 |
| I1 | 497,5 | 86,8 | 10,2 |
| I2 | 499,0 | 87,2 | 9,8 |
| I3 | 499,0 | 87,5 | 9,7 |
| I4 | 498,0 | 87,6 | 9,4 |

Ces résultats démontrent l'effet synergique du phosphore et du soufre lorsqu'ils sont présents dans le support des catalyseurs selon l'invention (catalyseurs I1 à I4) sur l'activité et la sélectivité des catalyseurs de reformage. En effet, les catalyseurs selon l'invention I1 à I4 ont des rendements en C5+ plus élevés que les catalyseurs non conformes à l'invention A, B et E et des rendement en C4- plus faibles que les catalyseurs non conformes à l'invention. Ils ont donc une sélectivité plus élevée que les catalyseurs A, B et E. Les catalyseurs selon l'invention sont plus actifs que les catalyseurs C, D et F car les catalyseurs I1 à I4 permettent d'obtenir une même valeur d'indice octane recherche (indice RON) à une température plus faible.

### Exemple 3 : Tests de rétention en chlore

Les catalyseurs D et I1 à I4 sont soumis à un test de rétention en chlore qui consiste à faire passer sur le catalyseur un flux d'air contenant 8000 ppm poids de chlore (engagé sous forme d'acide chlorhydrique) à un débit de 1 litre par heure et par gramme de catalyseur à 520°C pendant 1 heure. La teneur en chlore sur le catalyseur après le test (appelée teneur en chlore finale) est comparée à la teneur en chlore initiale (avant le test de chloration).

Pour chaque catalyseur, la perte en chlore définie comme le rapport (Clᵢₙᵢₜᵢₐₗₑ - Cl_{finale}) / Clᵢₙᵢₜᵢₐₗₑ est reportée dans le tableau 2.

**Tableau 2**

| Catalyseur | Teneur en chlore initiale (% poids) | Teneur en chlore finale (% poids) | Perte en chlore (%) |
|---|---|---|---|
| D | 1,09 | 0,79 | 28 |
| I1 | 1,09 | 0,96 | 12 |
| I2 | 1,11 | 0,91 | 18 |
| I3 | 1,11 | 0,90 | 19 |
| I4 | 1,10 | 0,90 | 18 |

Ces résultats montrent que les catalyseurs selon l'invention I1 à I4 ont une capacité de rétention en chlore supérieure par rapport au catalyseur non conforme D.

## Revendications

1. Catalyseur de reformage comprenant au moins du platine, au moins un métal promoteur choisi parmi le groupe formé par le rhénium et l'iridium, au moins un halogène choisi parmi le groupe formé par le fluor, le chlore, le brome et l'iode, ledit catalyseur étant obtenu à partir d'au moins un support d'alumine dans lequel la teneur en soufre est comprise entre 500 et 1200 ppm poids par rapport au poids total du support, et la teneur en phosphore est comprise entre 0,04 et 1% poids par rapport au poids total du support.

2. Catalyseur selon la revendication 1, dans lequel il comprend en outre au moins un métal dopant choisi parmi le groupe formé par le gallium, le germanium, l'indium, l'étain, l'antimoine, le thallium, le plomb, le bismuth, le titane, le chrome, le manganèse, le molybdène, le tungstène, le rhodium, le zinc.

3. Catalyseur selon l'une quelconque des revendications 1 à 2, dans lequel la teneur en phosphore dans le support d'alumine est comprise entre 0,05 et 0,8% poids par rapport au poids total du support.

4. Catalyseur selon l'une quelconque des revendications 1 à 2, dans lequel la teneur en phosphore dans le support d'alumine est comprise entre 0,07 et 0,65% poids par rapport au poids total du support.

5. Catalyseur selon l'une quelconque des revendications 1 à 4, dans lequel la teneur en soufre dans le support d'alumine est comprise entre 530 et 1150 ppm poids par rapport au poids total du support.

6. Catalyseur selon l'une quelconque des revendications 1 à 4, dans lequel la teneur en soufre dans le support d'alumine est comprise entre 550 et 1100 ppm poids par rapport au poids total du support.

7. Catalyseur selon l'une quelconque des revendications 1 à 4, dans lequel la teneur en soufre dans le support d'alumine est comprise entre 580 et 1050 ppm poids par rapport au poids total du support.

8. Catalyseur selon l'une quelconque des revendications 1 à 4, dans lequel la teneur en soufre dans le support d'alumine est comprise entre 580 et 950 ppm poids par rapport au poids total du support.

9. Catalyseur selon l'une quelconque des revendications précédentes, dans lequel la teneur en platine par rapport au poids total du catalyseur est comprise entre 0,02 à 2 % poids.

10. Catalyseur selon l'une quelconque des revendications précédentes, dans lequel la teneur en halogène est comprise entre 0,1 à 15% en poids par rapport au poids total du catalyseur.

11. Catalyseur selon l'une quelconque des revendications 1 à 10, dans lequel l'halogène est le chlore et sa teneur est comprise entre 0,5 et 2% poids par rapport au poids total du catalyseur.

12. Catalyseur selon l'une quelconque des revendications précédentes, dans lequel la teneur en métal dopant est comprise par rapport au poids total du catalyseur entre 0 à 2 % en poids.

13. Catalyseur selon l'une quelconque des revendications précédentes, dans lequel la teneur de chaque métal promoteur est comprise entre 0,02 et 10% poids par rapport au poids total du catalyseur.

14. Procédé de reformage catalytique dans lequel on met en contact le catalyseur selon l'une quelconque des revendications 1 à 13 avec une charge hydrocarbonée comprenant des hydrocarbures n-paraffiniques, naphténiques et aromatiques.

15. Utilisation d'un support d'alumine pour la fabrication d'un catalyseur de reformage, **caractérisé en ce que** la teneur en phosphore dans ledit support est comprise entre 0,04 et 1% poids par rapport au poids total du support, et la teneur en soufre dans ledit support est comprise entre 500 et 1200 ppm poids par rapport au poids total du support.

## Patentansprüche

1. Reformierungskatalysator, der mindestens Platin umfasst sowie mindestens ein Promotermetall, welches aus der Gruppe ausgewählt ist, die von Rhenium und Iridium gebildet wird, und mindestens ein Halogen, welches aus der Gruppe ausgewählt ist, die von Fluor, Chlor, Brom und lod gebildet wird, wobei der Katalysator ausgehend von mindestens einem Aluminiumoxidträger gebildet wird, dessen Schwefelgehalt im Bereich von 500 bis 1200 ppm nach Gewicht liegt, unter Bezugnahme auf das Gesamtgewicht des Trägers, und dessen Phosphorgehalt im Bereich von 0,04 bis 1 Gewichts-% liegt, unter Bezugnahme auf das Gesamtgewicht des Trägers.

2. Katalysator nach Anspruch 1, wobei dieser darüber hinaus mindestens ein Dotierungsmetall umfasst, welches aus der Gruppe ausgewählt ist, die von Gallium, Germanium, Indium, Zinn, Antimon, Thallium, Blei, Bismut, Titan, Chrom, Mangan, Molybdän, Wolfram, Rhodium, Zink gebildet wird.

3. Katalysator nach einem beliebigen der Ansprüche 1 bis 2, wobei der Gehalt an Phosphor in dem Aluminiumoxidträger im Bereich von 0,05 bis 0,8 Gewichts-% liegt, unter Bezugnahme auf das Gesamtgewicht des Trägers.

4. Katalysator nach einem beliebigen der Ansprüche 1 bis 2, wobei der Gehalt an Phosphor in dem Aluminiumoxidträger im Bereich von 0,07 bis 0,65 Gewichts-% liegt, unter Bezugnahme auf das Gesamtgewicht des Trägers.

5. Katalysator nach einem beliebigen der Ansprüche 1 bis 4, wobei der Gehalt an Schwefel in dem Aluminiumoxidträger im Bereich von 530 bis 1150 ppm nach Gewicht liegt, unter Bezugnahme auf das Gesamtgewicht des Trägers.

6. Katalysator nach einem beliebigen der Ansprüche 1 bis 4, wobei der Gehalt an Schwefel in dem Aluminiumoxidträger im Bereich von 550 bis 1100 ppm nach Gewicht liegt, unter Bezugnahme auf das Gesamtgewicht des Trägers.

7. Katalysator nach einem beliebigen der Ansprüche 1 bis 4, wobei der Gehalt an Schwefel in dem Aluminiumoxidträger im Bereich von 580 bis 1050 ppm nach Gewicht liegt, unter Bezugnahme auf das Gesamtgewicht des Trägers.

8. Katalysator nach einem beliebigen der Ansprüche 1 bis 4, wobei der Gehalt an Schwefel in dem Aluminiumoxidträger im Bereich von 580 bis 950 ppm nach Gewicht liegt, unter Bezugnahme auf das Gesamtgewicht des Trägers.

9. Katalysator nach einem beliebigen der vorhergehenden Ansprüche, wobei dessen Gehalt an Platin im Bereich von 0,02 bis 2 Gewichts-% liegt, unter Bezugnahme auf das Gesamtgewicht des Katalysators.

10. Katalysator nach einem beliebigen der vorhergehenden Ansprüche, wobei dessen Gehalt an Halogen im Bereich von 0,1 bis 15 Gewichts-% liegt, unter Bezugnahme auf das Gesamtgewicht des Katalysators.

11. Katalysator nach einem beliebigen der Ansprüche 1 bis 10, wobei es sich bei dem Halogen um Chlor handelt und dessen Gehalt im Bereich von 0,5 bis 2 Gewichts-% liegt, unter Bezugnahme auf das Gesamtgewicht des Katalysators.

12. Katalysator nach einem beliebigen der vorhergehenden Ansprüche, wobei dessen Gehalt an Dotierungsmetall im Bereich von 0 bis 2 Gewichts-% liegt, unter Bezugnahme auf das Gesamtgewicht des Katalysators.

13. Katalysator nach einem beliebigen der vorhergehenden Ansprüche, wobei dessen Gehalt an jedem der Promotormetalle im Bereich von 0,02 bis 10 Gewichts-% liegt, unter Bezugnahme auf das Gesamtgewicht des Katalysators.

14. Katalytisches Reformierungsverfahren, wobei ein Katalysator nach einem beliebigen der Ansprüche 1 bis 13 mit einer kohlenwasserstoffhaltigen Charge in Kontakt gebracht wird, welche n-paraffinartige, cycloalkanartige und aromatische Kohlenwasserstoffe umfasst.

15. Verwendung eines Aluminiumoxidträgers zur Herstellung eines Reformierungskatalysators, **dadurch gekennzeichnet, dass** der Gehalt an Phosphor in dem Träger im Bereich von 0,04 bis 1 Gewichts-% liegt, unter Bezugnahme auf das Gesamtgewicht des Trägers, und der Gehalt an Schwefel in dem Träger im Bereich von 500 bis 1200 ppm nach Gewicht liegt, unter Bezugnahme auf das Gesamtgewicht des Trägers.

## Claims

1. A reforming catalyst comprising at least platinum, at least one promoter metal selected from the group formed by rhenium and iridium, at least one halogen selected from the group formed by fluorine, chlorine, bromine and iodine, said catalyst being obtained from at least one alumina support in which the sulphur content is in the range 500 to 1200 ppm by weight with respect to the total support weight, and the phosphorus content is in the range 0.04% to 1% by weight with respect to the total support weight.

2. A catalyst according to claim 1, further comprising at least one dopant metal selected from the group formed by gallium, germanium, indium, tin, antimony, thallium, lead, bismuth, titanium, chromium, manganese, molybdenum, tungsten, rhodium and zinc.

3. A catalyst according to claim 1 or claim 2, in which the phosphorus content in the alumina support is in the range 0.05% to 0.8% by weight with respect to the total support weight.

4. A catalyst according to claim 1 or claim 2, in which the phosphorus content in the alumina support is in the range 0.07% to 0.65% by weight with respect to the total support weight.

5. A catalyst according to any one of claims 1 to 4, in which the sulphur content in the alumina support is in the range 530 to 1150 ppm by weight with respect to the total support weight.

6. A catalyst according to any one of claims 1 to 4, in which the sulphur content in the alumina support is in the range 550 to 1100 ppm by weight with respect to the total support weight.

7. A catalyst according to any one of claims 1 to 4, in which the sulphur content in the alumina support is in the range 580 to 1050 ppm by weight with respect to the total support weight.

8. A catalyst according to any one of claims 1 to 4, in which the sulphur content in the alumina support is in the range 580 to 950 ppm by weight with respect to the total support weight.

9. A catalyst according to any one of the preceding claims, in which the platinum content with respect to the total catalyst weight is in the range 0.02% to 2% by weight.

10. A catalyst according to any one of the preceding claims, in which the halogen content is in the range 0.1% to 15% by weight with respect to the total catalyst weight.

11. A catalyst according to any one of claims 1 to 10, in which the halogen is chlorine and its content is in the range 0.5% to 2% by weight with respect to the total catalyst weight.

12. A catalyst according to any one of the preceding claims, in which the dopant metal content is in the range 0 to 2% by weight with respect to the total catalyst weight.

13. A catalyst according to any one of the preceding claims, in which the quantity of each promoter metal is in the range 0.02% to 10% by weight with respect to the total catalyst weight.

14. A catalytic reforming process in which the catalyst according to any one of claims 1 to 13 is brought into contact with a hydrocarbon feed comprising n-paraffinic, naphthenic and aromatic hydrocarbons.

15. Use of an alumina support for the manufacture of a reforming catalyst **characterized in that** the phosphorus content in said support is in the range 0.04% to 1% by weight with respect to the total support weight, and the sulphur content in said support is in the range 500 to 1200 ppm by weight with respect to the total support weight.
